# EUROPEAN PATENT SPECIFICATION

(11) **EP 3 210 313 B1**
(45) Date of publication and mention of the grant of the patent: **06.02.2019**
(21) Application number: 15779144.3
(22) Date of filing: 01.10.2015
(51) Int. Cl.: H04B 5/00, H02J 5/00

(54) **A SEGMENTED CONDUCTIVE BACK COVER FOR WIRELESS POWER TRANSFER**
SEGMENTIERTE LEITFÄHIGE RÜCKABDECKUNG ZUR DRAHTLOSEN STROMÜBERTRAGUNG
COUVERTURE ARRIÈRE CONDUCTRICE À SEGMENTS POUR TRANSMISSION D'ÉNERGIE SANS FIL

(30) Priority: 20.10.2014 US 201462065888 P; 30.06.2015 US 201514788011
(43) Date of publication of application: 30.08.2017
(73) Proprietor: Qualcomm Incorporated, San Diego, CA 92121-1714 (US)
(72) Inventor: JEONG, Seong Heon, San Diego, California 92121-1714 (US)
(74) Representative: Tomkins & Co
(86) International application number: PCT/US2015/053513
(87) International publication number: WO 2016/064553

(56) References cited:
- WO-A1-2014/167881
- US-A1- 2013 043 734

## Description

### TECHNICAL FIELD

The present disclosure relates generally to wireless power transfer, and in particular to wireless power transfer in electronic devices that have a metallic back cover.

### CROSS REFERENCE TO RELATED APPLICATIONS

This application claims the benefit of the filing date of U.S. Provisional App. No. 62/065,888 filed October 20, 2014. This application also claims priority to U.S. Application No. 14/788,011 filed June 30, 2015.

### BACKGROUND

Wireless power transfer is an increasingly popular capability in portable electronic devices, such as mobile phones, computer tablets, etc. because such devices typically require long battery life and low battery weight. The ability to power an electronic device without the use of wires provides a convenient solution for users of portable electronic devices. Wireless power charging systems, for example, may allow users to charge and/or power electronic devices without physical, electrical connections, thus reducing the number of components required for operation of the electronic devices and simplifying the use of the electronic device.

Wireless power transfer allows manufacturers to develop creative solutions to problems due to having limited power sources in consumer electronic devices. Wireless power transfer may reduce overall cost (for both the user and the manufacturer) because conventional charging hardware such as power adapters and charging chords can be eliminated. There is flexibility in having different sizes and shapes in the components (e.g., magnetic coil, charging plate, etc.) that make up a wireless power transmitter and/or a wireless power receiver in terms of industrial design and support for a wide range of devices, from mobile handheld devices to computer laptops.

US2013/0043734 discloses wireless power transfer in which two or more coils in different positions on housing of an electronic device allows wireless charging in different positions.

WO2014/167881 discloses an induction coil for wireless charging and an induction coil for near field communication which are spaced apart on the metal cover of a mobile phone.

### SUMMARY

In some aspects of the present disclosure, an apparatus for wireless power transfer may include a portion of a housing of an electronic device having at least a first electrically conductive segment and a second electrically conductive segment, the first and second electrically conductive segments spaced apart from each other. The apparatus may include a coil of electrically conductive material arranged relative to the first and second electrically conductive segments and a power receiving element comprising the coil of electrically conductive material and at least one of the first electrically conductive segment or the second electrically conductive segment. The power receiving element may be configured to couple to an externally generated magnetic field to wirelessly receive power.

In some aspects, the coil of electrically conductive material may be arranged substantially only along a spacing between the first and second electrically conductive segments. In other aspects, the coil of electrically conductive material may be disposed within a spacing between the first and second electrically conductive segments.

In some aspects, the coil of electrically conductive material may be electrically connected to at least one of the first electrically conductive segment or the second electrically conductive segment.

In some aspects, the first electrically conductive segment may constitute at least a partial turn of the power receiving element. The coil of electrically conductive material may define one or more full turns of the power receiving element. The first electrically conductive segment may be electrically connected with the coil of electrically conductive material. In some aspects, the second electrically conductive segment may be surrounded by the first electrically conductive segment.

In some aspects, the apparatus may further include an electrical connection between the first electrically conductive segment and the second electrically conductive segment.

In some aspects, the apparatus may further include a plurality of electrically conductive segments including the first and second electrically conductive segments. The plurality of electrically conductive segments may spaced apart from each other by a plurality of slots that run horizontally, vertically, or diagonally.

In some aspects, the first and second electrically conductive segments may be arranged vertically or horizontally.

In some aspects, the apparatus may further include ferrite material disposed between at least a portion of the coil of electrically conductive material and electronic components of the electronic device. The ferrite material may be arranged relative to the electronic components of the electronic device to shield the electronic components from magnetic fields including the externally generated magnetic field that can arise during wireless power transfer.

In some aspects, the power receiving element may further include a capacitor network having at least one capacitor. The power receiving element may have a resonant frequency defined at least by a capacitance of the capacitor network and an inductance of the coil of electrically conductive material and the at least one of the first or second electrically conductive segments.

In some aspects, the apparatus may further include a battery electrically connected to the power receiving element. The power receiving element may be further configured to charge the battery.

In some aspects of the present disclosure, an apparatus for wireless power transfer in an electronic device may include a plurality of electrically conductive segments that constitute a portion of a housing configured to enclose electronic components of the electronic device. The plurality electrically conductive segments may be separated from each other by a plurality of slots. The apparatus may include an electrically conductive coil arranged relative to the plurality of electrically conductive segments and a power receiving element that comprises the electrically conductive coil and the plurality of electrically conductive segments. The power receiving element may be configured to couple to an externally generated magnetic field to wirelessly receive power.

In some aspects, eddy currents can form in at least some of the plurality of electrically conductive segments in response to the externally generated magnetic field. The electrically conductive coil may be configured to generate electrical current in response to a first magnetic field generated by the eddy currents.

In some aspects, an arrangement of the electrically conductive coil relative to the plurality of slots may be such that the electrically conductive coil substantially only crosses the plurality of slots.

In some aspects, the portion of the housing may include a top piece, a middle piece, and a bottom piece. The middle piece may include the plurality of electrically conductive segments and the plurality of slots.

In some aspects, the power receiving element may further include a first electrically conductive segment of the plurality of electrically conductive segments electrically connected in series with the electrically conductive coil. The first electrically conductive segment may define at least one turn of the power receiving element and the electrically conductive coil may define additional turns of the power receiving element.

In some aspects, the apparatus may further include a second electrically conductive segment of the plurality of electrically conductive segments that is electrically separate from and surrounded by the first electrically conductive segment.

In some aspects, two or more of the plurality of electrically conductive segments may be electrically connected in series and may include at least a portion of a turn of the power receiving element.

In some aspects, the electrically conductive coil may lie across some of the plurality of electrically conductive segments. The electrically conductive coil may be disposed across some of the plurality of slots.

In some aspects, a separation distance between some of the plurality of electrically conductive segments varies.

In some aspects of the present disclosure, a method for wireless power transfer in an electronic device may include magnetically inducing flows of eddy currents in a plurality of conductive segments that comprise a portion of a housing of an electronic device. The method may include magnetically inducing a flow of current in an electrically conductive coil arranged relative to the plurality of conductive segments and providing either or both the eddy currents in at least one of the plurality of conductive segments or the current in the electrically conductive coil to electronic circuits in the electronic device.

In some aspects, the method may further include adding the eddy currents in the plurality of conductive segments and the current in the electrically conductive coil to produce a combined current that is provided to the electronic circuits.

In some aspects, magnetically inducing a flow of current in the electrically conductive coil may include coupling to magnetic fields that arise due to the flow of eddy currents in the plurality of conductive segments.

In some aspects, the method may further include coupling to an externally generated magnetic field to induce the flows of eddy currents in the plurality of conductive segments.

In some aspects, the method may further include coupling to an externally generated magnetic field to induce the flow of current in the electrically conductive coil.

In some aspects of the present disclosure, apparatus for wireless power transfer in an electronic device may include means for housing the electronic device formed at least in part by a plurality of first means for conducting first electrical current. The plurality of first means spaced from each other. The apparatus may further include a second means for conducting second electrical current different than the first electrical current and means for providing either or both the first electrical current or the second electrical current to electronic circuits in the electronic device.

In some aspects, the apparatus may further include means for combining the first electrical current and the second electrical current to form a combined current that is provided to electronic circuits.

The following detailed description and accompanying drawings provide a better understanding of the nature and advantages of the present disclosure.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. In the accompanying drawings:
Fig. 1 is a functional block diagram of a wireless power transfer system in accordance with an illustrative embodiment.
Fig. 2 is a functional block diagram of a wireless power transfer system in accordance with an illustrative embodiment.
Fig. 3 is a schematic diagram of a portion of transmit circuitry or receive circuitry of Fig. 2 including a power transmitting or receiving element in accordance with an illustrative embodiment.
Figs. 4A and 4B depict illustrative examples of housings for an electronic device.
Figs. 5A, 5B, and 5C illustrate examples of a segmented back cover of a housing for an electronic device in accordance with the present disclosure.
Figs. 6A and 6B show an example of a power receiving element in accordance with some embodiments of the present disclosure.
Figs. 6C and 6C1 show some details of the power receiving element shown in Fig. 6B.
Fig. 6D illustrates operation of a power receiving element in accordance with some embodiments of the present disclosure.
Fig. 6E illustrates an example of a magnetic shield.
Figs. 7A and 7B illustrate a power receiving element in accordance with some embodiments of the present disclosure.
Fig. 7C illustrates a power receiving element in accordance with some embodiments of the present disclosure.
Figs. 8A and 8B illustrate examples of vertically stacked power receiving elements in accordance with some embodiments of the present disclosure.
Fig. 9 illustrates an example of a horizontally configured power receiving element in accordance with some embodiments of the present disclosure.
Fig. 10 illustrates an example of a vertically stacked power receiving element in accordance with some embodiments of the present disclosure.
Figs. 11A, 11B, and 11C illustrate examples showing additional aspects in accordance with the present disclosure.

### DETAILED DESCRIPTION

In the following description, for purposes of explanation, numerous examples and specific details are set forth in order to provide a thorough understanding of the present disclosure. It will be evident, however, to one skilled in the art that the present disclosure as expressed in the claims may include some or all of the features in these examples, alone or in combination with other features described below, and may further include modifications and equivalents of the features and concepts described herein.

Wireless power transfer may refer to transferring any form of energy associated with electric fields, magnetic fields, electromagnetic fields, or otherwise from a transmitter to a receiver without the use of physical electrical conductors (e.g., power may be transferred through free space). The power output into a wireless field (e.g., a magnetic field or an electromagnetic field) may be received, captured by, or coupled by a "power receiving element" to achieve power transfer.

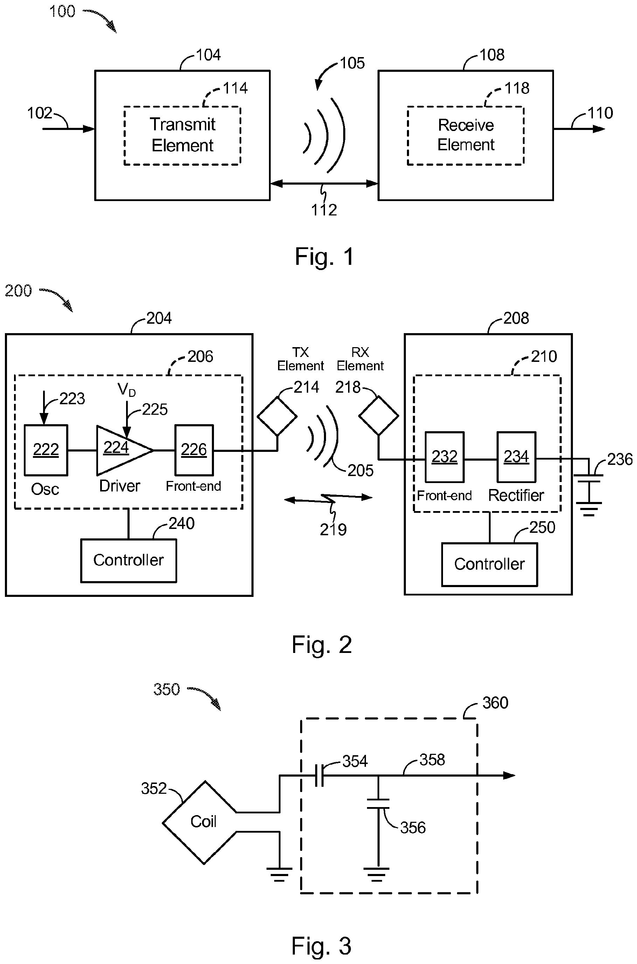

Fig. 1 is a functional block diagram of a wireless power transfer system 100, in accordance with an illustrative embodiment. Input power 102 may be provided to a transmitter 104 from a power source (not shown in this figure) to generate a wireless (e.g., magnetic or electromagnetic) field 105 for performing energy transfer. A receiver 108 may couple to the wireless field 105 and generate output power 110 for storing or consumption by a device (not shown in this figure) coupled to the output power 110. The transmitter 104 and the receiver 108 may be separated by a distance 112. The transmitter 104 may include a power transmitting element 114 for transmitting/coupling energy to the receiver 108. The receiver 108 may include a power receiving element 118 for receiving or capturing/coupling energy transmitted from the transmitter 104.

In one illustrative embodiment, the transmitter 104 and the receiver 108 may be configured according to a mutual resonant relationship. When the resonant frequency of the receiver 108 and the resonant frequency of the transmitter 104 are substantially the same or very close, transmission losses between the transmitter 104 and the receiver 108 are reduced. As such, wireless power transfer may be provided over larger distances. Resonant inductive coupling techniques may thus allow for improved efficiency and power transfer over various distances and with a variety of inductive power transmitting and receiving element configurations.

In certain embodiments, the wireless field 105 may correspond to the "near field" of the transmitter 104 as will be further described below. The near-field may correspond to a region in which there are strong reactive fields resulting from the currents and charges in the power transmitting element 114 that minimally radiate power away from the power transmitting element 114. The near-field may correspond to a region that is within about one wavelength (or a fraction thereof) of the power transmitting element 114.

In certain embodiments, efficient energy transfer may occur by coupling a large portion of the energy in the wireless field 105 to the power receiving element 118 rather than propagating most of the energy in an electromagnetic wave to the far field.

In certain implementations, the transmitter 104 may output a time varying magnetic (or electromagnetic) field with a frequency corresponding to the resonant frequency of the power transmitting element 114. When the receiver 108 is within the wireless field 105, the time varying magnetic (or electromagnetic) field may induce a current in the power receiving element 118. As described above, if the power receiving element 118 is configured as a resonant circuit to resonate at the frequency of the power transmitting element 114, energy may be efficiently transferred. An alternating current (AC) signal induced in the power receiving element 118 may be rectified to produce a direct current (DC) signal that may be provided to charge or to power a load.

Fig. 2 is a functional block diagram of a wireless power transfer system 200, in accordance with another illustrative embodiment. The system 200 may include a transmitter 204 and a receiver 208. The transmitter 204 (also referred to herein as power transmitting unit, PTU) may include transmit circuitry 206 that may include an oscillator 222, a driver circuit 224, a front-end circuit 226. The oscillator 222 may be configured to generate a signal at a desired frequency that may adjust in response to a frequency control signal 223. The oscillator 222 may provide the oscillator signal to the driver circuit 224. The driver circuit 224 may be configured to drive the power transmitting element 214 at, for example, a resonant frequency of the power transmitting element 214 based on an input voltage signal (VD) 225. The driver circuit 224 may be a switching amplifier configured to receive a square wave from the oscillator 222 and output a sine wave.

The front-end circuit 226 may include a filter circuit to filter out harmonics or other unwanted frequencies. The front-end circuit 226 may include a matching circuit to match the impedance of the transmitter 204 to the power transmitting element 214. As will be explained in more detail below, the front-end circuit 226 may include a tuning circuit to create a resonant circuit with the power transmitting element 214. As a result of driving the power transmitting element 214, the power transmitting element 214 may generate a wireless field 205 to wirelessly output power at a level sufficient for charging a battery 236, or otherwise powering a load.

The transmitter 204 may further include a controller 240 operably coupled to the transmit circuitry 206 configured to control one or aspects of the transmit circuitry 206 or accomplish other operations relevant to managing the transfer of power. The controller 240 may be a micro-controller or a processor. The controller 240 may be implemented as an application-specific integrated circuit (ASIC). The controller 240 may be operably connected, directly or indirectly, to each component of the transmit circuitry 206. The controller 240 may be further configured to receive information from each of the components of the transmit circuitry 206 and perform calculations based on the received information. The controller 240 may be configured to generate control signals (e.g., signal 223) for each of the components that may adjust the operation of that component. As such, the controller 240 may be configured to adjust or manage the power transfer based on a result of the operations performed by it. The transmitter 204 may further include a memory (not shown) configured to store data, for example, such as instructions for causing the controller 240 to perform particular functions, such as those related to management of wireless power transfer.

The receiver 208 (also referred to herein as power receiving unit, PRU) may include receive circuitry 210 that may include a front-end circuit 232 and a rectifier circuit 234. The front-end circuit 232 may include matching circuitry to match the impedance of the receive circuitry 210 to the power receiving element 218. As will be explained below, the front-end circuit 232 may further include a tuning circuit to create a resonant circuit with the power receiving element 218. The rectifier circuit 234 may generate a DC power output from an AC power input to charge the battery 236, as shown in Fig. 2. The receiver 208 and the transmitter 204 may additionally communicate on a separate communication channel 219 (e.g., Bluetooth, Zigbee, cellular, etc.). The receiver 208 and the transmitter 204 may alternatively communicate via in-band signaling using characteristics of the wireless field 205.

The receiver 208 may be configured to determine whether an amount of power transmitted by the transmitter 204 and received by the receiver 208 is appropriate for charging the battery 236. In certain embodiments, the transmitter 204 may be configured to generate a predominantly non-radiative field with a direct field coupling coefficient (k) for providing energy transfer. Receiver 208 may directly couple to the wireless field 205 and may generate an output power for storing or consumption by a battery (or load) 236 coupled to the output or receive circuitry 210.

The receiver 208 may further include a controller 250 configured similarly to the transmit controller 240 as described above for managing one or more aspects of the wireless power receiver 208. The receiver 208 may further include a memory (not shown) configured to store data, for example, such as instructions for causing the controller 250 to perform particular functions, such as those related to management of wireless power transfer.

As discussed above, transmitter 204 and receiver 208 may be separated by a distance and may be configured according to a mutual resonant relationship to minimize transmission losses between the transmitter 204 and the receiver 208.

Fig. 3 is a schematic diagram of a portion of the transmit circuitry 206 or the receive circuitry 210 of Fig. 2, in accordance with illustrative embodiments. As illustrated in Fig. 3, transmit or receive circuitry 350 may include a power transmitting or receiving element 352 and a tuning circuit 360. The power transmitting or receiving element 352 may also be referred to or be configured as an antenna or a "loop" antenna. The term "antenna" generally refers to a component that may wirelessly output or receive energy for coupling to another "antenna." The power transmitting or receiving element 352 may also be referred to herein or be configured as a "magnetic" antenna, or an induction coil, a resonator, or a portion of a resonator. The power transmitting or receiving element 352 may also be referred to as a coil or resonator of a type that is configured to wirelessly output or receive power. As used herein, the power transmitting or receiving element 352 is an example of a "power transfer component" of a type that is configured to wirelessly output and/or receive power. The power transmitting or receiving element 352 may include an air core or a physical core such as a ferrite core (not shown in this figure).

When the power transmitting or receiving element 352 is configured as a resonant circuit or resonator with tuning circuit 360, the resonant frequency of the power transmitting or receiving element 352 may be based on the inductance and capacitance. Inductance may be simply the inductance created by a coil or other inductor forming the power transmitting or receiving element 352. Capacitance (e.g., a capacitor) may be provided by the tuning circuit 360 to create a resonant structure at a desired resonant frequency. As a non limiting example, the tuning circuit 360 may comprise a capacitor 354 and a capacitor 356 may be added to the transmit and/or receive circuitry 350 to create a resonant circuit.

The tuning circuit 360 may include other components to form a resonant circuit with the power transmitting or receiving element 352. As another non limiting example, the tuning circuit 360 may include a capacitor (not shown) placed in parallel between the two terminals of the circuitry 350. Still other designs are possible. In some embodiments, the tuning circuit in the front-end circuit 226 may have the same design (e.g., 360) as the tuning circuit in front-end circuit 232. In other embodiments, the front-end circuit 226 may use a tuning circuit design different than in the front-end circuit 232.

For power transmitting elements, the signal 358, with a frequency that substantially corresponds to the resonant frequency of the power transmitting or receiving element 352, may be an input to the power transmitting or receiving element 352. For power receiving elements, the signal 358, with a frequency that substantially corresponds to the resonant frequency of the power transmitting or receiving element 352, may be an output from the power transmitting or receiving element 352.

Electronic devices are increasingly incorporating metallic back covers in the design of the housings/casings of the electronic devices. The metallic back covers, however, present a challenge for wireless communications, since metal can absorb electromagnetic (EM) radiation. To accommodate the antennas used for cellular communication and other forms of wireless communication (e.g., WiFi, Bluetooth, etc.), the metallic back cover may be divided into multiple pieces and the antennas positioned in the slots between the pieces. The slots allow for the transmission and reception of EM radiation despite the presence of the metallic back covers.

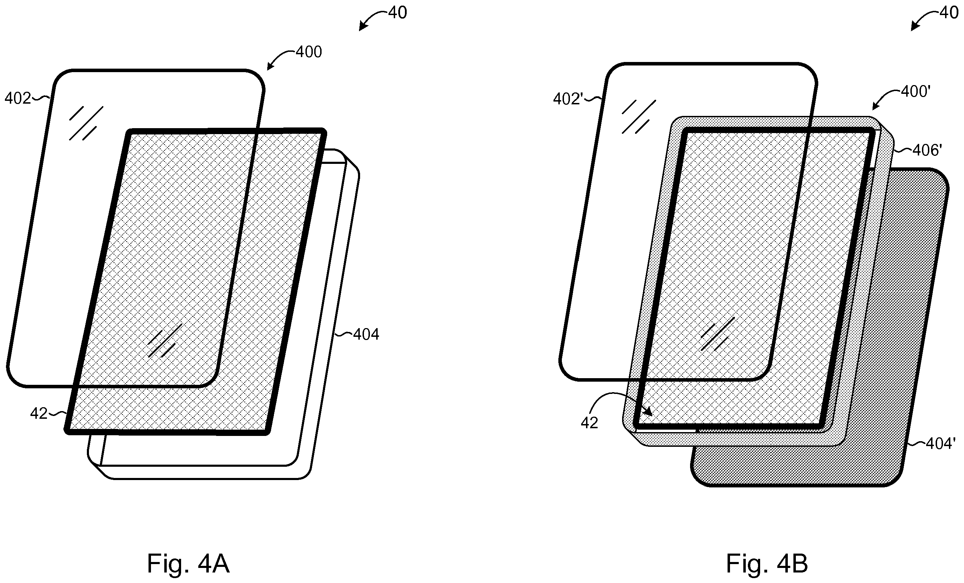

Fig. 4A depicts a schematic representation of an electronic device 40 in accordance with the present disclosure. The electronic device 40 may be a mobile computing device (e.g., computer tablet, laptop, etc.), a mobile communication device (e.g., cellular phone), a smartphone device, and so on. The electronic device 40 may include electronic components 42 housed within a means for housing the electronic device 40 (housing 400). The housing 400 may comprise a front cover 402 and a back cover 404.

In some embodiments, the front cover 402 may comprise a display panel component (e.g., a light emitting diode array) of the electronic device 40. A display panel front cover 402 may include connections to the electronic components 42 in order to drive the display, and may have a protective outer layer that can complete the enclosure that defines the housing 400. In other embodiments, the display panel of the electronic device 40 may be incorporated with the electronic components 42 and front cover 402 may be a sheet of glass or plastic or other appropriate material disposed atop the display panel.

In some embodiments, the back cover 404 may be configured as a shell or other similar structure that defines a volume within which the electronic components 42 may be disposed. In accordance with the present disclosure, the back cover 404 may comprise a suitable material that is electrically conductive. In some embodiments, the back cover 404 may be entirely of electrically conductive material or materials. In other embodiments, the back cover 404 may include electrically non-conductive materials as well, such as glass, plastics, etc. More details of back cover 404 will be described below.

Fig. 4B depicts a schematic representation of a housing 400' in accordance with other embodiments. The housing 400' may comprise front cover 402', a back cover 404', and a side connector 406'. The front cover 402' may be as described above. The back cover 404' may be configured as a cover plate, a panel, or other such similar structure. In accordance with the present disclosure, the back cover 404' may comprise any suitable material that is electrically conductive, and in some embodiments may include electrically non-conductive materials. The side connector 406' may be configured to complete the enclosure of the housing 400' by connecting or otherwise joining together the front cover 402' and the back cover 404'. In various embodiments, the side connector 406' may be plastic or metallic.

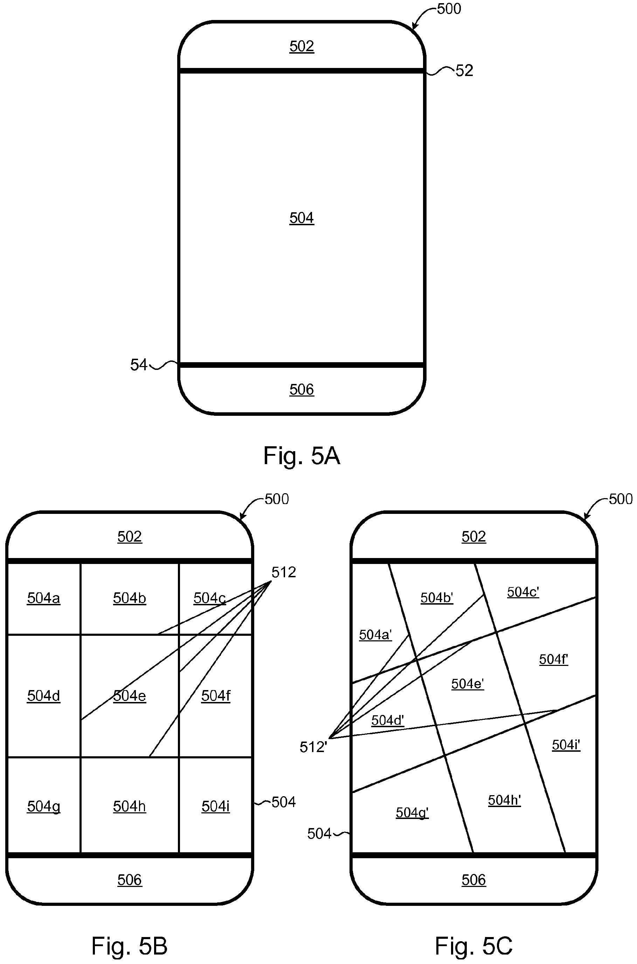

Figs. 5A - 5C illustrate aspects of a back cover 500 in accordance with the present disclosure. It will be understood that the description of back cover 500 and other embodiments of back covers described herein apply to the illustrative configurations shown in Figs. 4A and 4B, and to other configurations of back covers not shown.

Referring to Fig. 5A, in some embodiments, the back cover 500 may be partitioned into several pieces: a top piece 502, a middle piece 504, and a bottom piece 506. The top piece 502 may be separated from the middle piece 504 by a suitable separator 52. Similarly, a separator 54 may separate the middle piece 504 from the bottom piece 506.

In some embodiments, the separators 52, 54 may be plastic strips or other electrically non-conductive material in order to accommodate communication antennas (not shown) in an electronic device (e.g., 40, Fig. 4A). The communication antennas may provide cellular communications, WiFi, global positioning systems (GPS), Bluetooth, and so on. Cellular communications may use standards such as long term evolution (LTE), wideband code division multiple access (WCDMA), global systems for mobile (GSM), code division multiple access (CDMA), etc. In some embodiments, the top piece 502 and bottom piece 506 may be electrically non-conductive material, for example to further to accommodate the communications antennas in the electronic device. In some embodiments, either or both the top piece 502 and bottom piece 506 may be omitted; for example, depending on the configuration of the communication antennas, because there are not communication antennas, and so on. The following descriptions, however, will include a top piece 502 component and a bottom piece 506 component with the understanding they may be present in some embodiments and in other embodiments either or both may be omitted.

In accordance with the present disclosure, a portion of the back cover 500 may be segmented into several segments. Fig. 5B, for example, shows in some embodiments, the middle piece 504 of back cover 500 may be an electrically conductive material (e.g., a metal). The middle piece 504 may be partitioned into a plurality of electrically conductive segments ("metallic segments") 504a - 504i. Fig. 5B shows the middle piece 504 is partitioned into nine segments arranged in a 3×3 grid. In other embodiments, the middle piece 504 may be partitioned into more or fewer segments and arranged in configurations other than a 3×3 grid.

The conductive segments 504a - 504i may be spaced apart from each other. In some embodiments, for example, slots 512 may provide physical separation between the conductive segments 504a - 504i. In some embodiments, some of the slots 512 may be filled with a plastic or otherwise electrically non-conductive material that can hold together the conductive segments 504a - 504i.

The middle piece 504 of back cover 500 may be partitioned in arbitrary patterns. Fig. 5B, for example, shows in some embodiments, the slots 512 that separate the conductive segments 504a - 504i may run in rectilinear directions, horizontally and/or vertically; the conductive segments 504a - 504i are rectangular. In other embodiments, such as shown in Fig. 5C for example, the slots 512' may run along diagonal lines. The conductive segments 504a' - 504i' may be regular polygons (e.g., pentagons, hexagons, etc.) or arbitrarily shaped polygons. Though not shown, it is understood that in still other embodiments, the slots may be curved to define conductive segments that have curved sides.

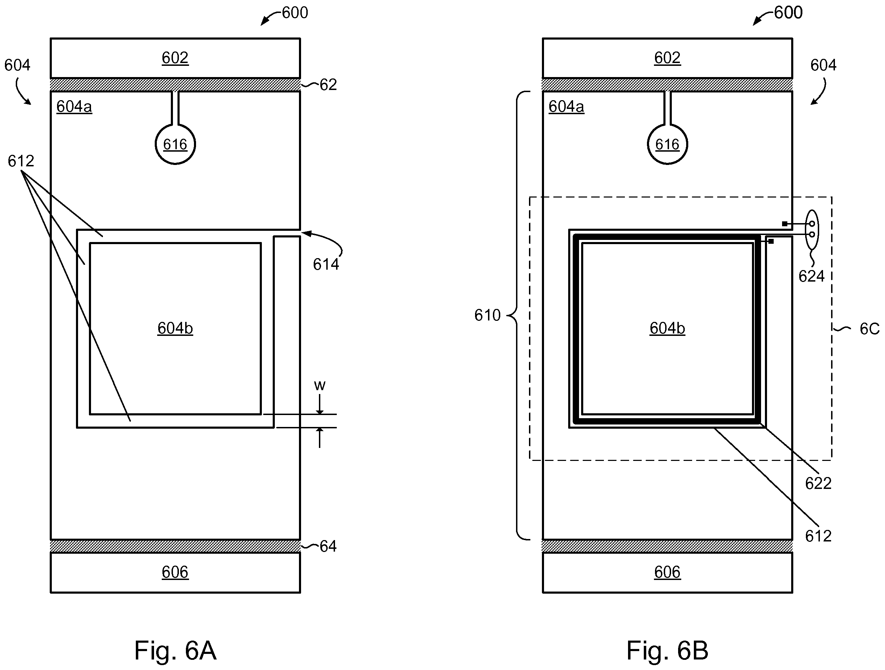

The discussion will now turn to descriptions of power receiving elements in accordance with the present disclosure. Figs. 6A and 6B, for example, show an illustrative example of a back cover 600 configured with a power receiving element 610 (Fig. 6B) in accordance with some embodiments of the present disclosure. The back cover 600 may comprise a top piece 602, a middle piece 604, and a bottom piece 606. The top piece 602 may be separated from the middle piece 604 by a suitable separator 62, such as described in Fig. 5A. Similarly, a separator 64 may separate the middle piece 604 from the bottom piece 606.

Referring to Fig. 6A, the middle piece 604 may be electrically conductive. The middle piece 604 may be partitioned into a plurality of means for conducting electrical current. For example, the middle piece 604 may comprise conductive segments 604a, 604b. The conductive segment 604a may include an opening 616, for example, to accommodate the lens of a camera. In accordance with some embodiments, the conductive segment 604a may surround or otherwise encircle the conductive segment 604b. Slots 612 may separate the conductive segment 604a from the conductive segment 604b. In some embodiments, the slot width w may be 2 mm or 3 mm. In other embodiments, the slot width w may be any suitable width. The conductive segment 604a may include a break 614.

Referring to Fig. 6B, the power receiving element 610 may comprise the conductive segments 604a, 604b of middle piece 604 and means for conducting electrical current, for example a coil of electrically conductive material ("conductive coil") 622, disposed among the conductive segments 604a, 604b. In some embodiments, the conductive coil 622 may comprise conductive traces formed (printed, etched, etc.) on a flexible printed circuit board (PCB). The flexible PCB may be placed in the slots 612. In other embodiments, the conductive coil 622 may comprise a coil of wire disposed in the slots 612.

In accordance with some embodiments, the conductive coil 622 may be arranged along the slots 612 that separate the conductive segments 604a, 604b. For example, in some embodiments, the conductive coil 622 may be disposed within the spaces defined by the slots 612. The power receiving element 610 may include means for providing the electrical current produced in the conductive segment 604a and the conductive coil 622 to electronic components (e.g., 42, Fig. 1) of an electronic device. In some embodiments, for example, the power receiving element 610 may be connected to output terminals (feeds) 624 that can connect to and provide power to electronic components (e.g., 42, Fig. 1) of an electronic device.

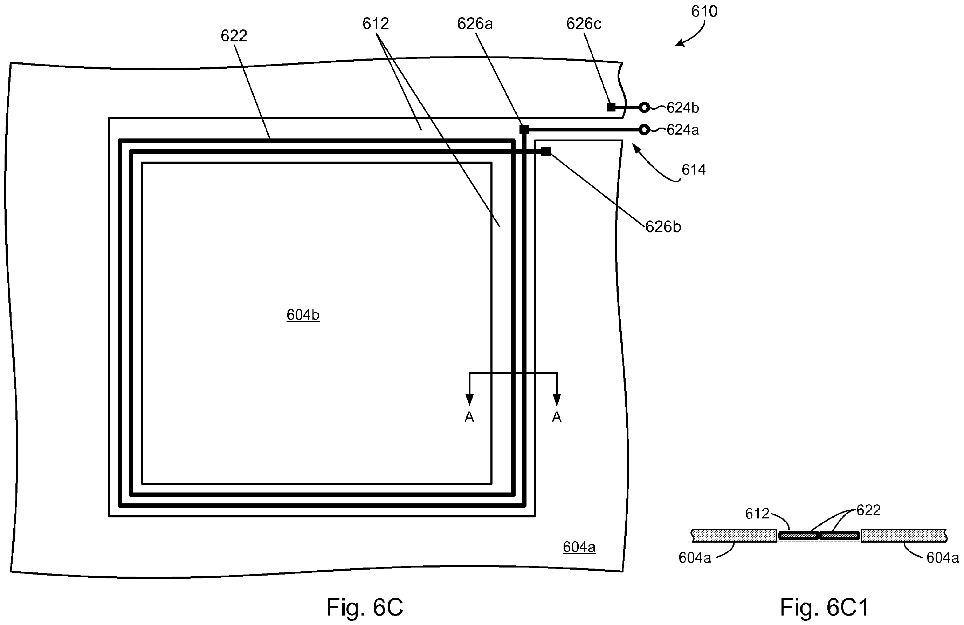

Additional detail for region 6C of the power receiving element 610 identified in Fig. 6B is shown with reference to Fig. 6C. The additional detail shown in Fig. 6C reveals that one end of the conductive coil 622 may have an electrical connection 626a to one of the output terminals 624a. The other end of the conductive coil 622 may have a connection 626b to the conductive segment 604a on one side of the break 614 formed in the conductive segment 604a. Since the conductive segment 604a encircles conductive segment 604b, the conductive segment 604a may be viewed as being connected in series with the conductive coil 622. Accordingly, starting at the output terminal 624a, a clockwise path can be traced by following the conductive coil 622 for two turns or windings to electrical connection 626b. The clockwise path continues in the conductive segment 604a from the electrical connection 626b to an electrical connection 626c with output terminal 624b on the other side of the break 614 for another turn. Accordingly, the conductive coil 622 may define two turns of the power receiving element 610 and the conductive segment 604a may define an additional turn in the power receiving element 610.

Fig. 6C1 is a cross-sectional view taken along view lines A-A in Fig. 6C. In some embodiments, the conductive coil 622 may be disposed within the space (channel) defined by the slots 612. As shown in Fig. 6C1, in some embodiments, the conductive coil 622 may comprise traces formed in a flexible PCB. In other embodiments (not shown), the conductive coil 622 may lie along the slots 612 above the space defined by the slots 612.

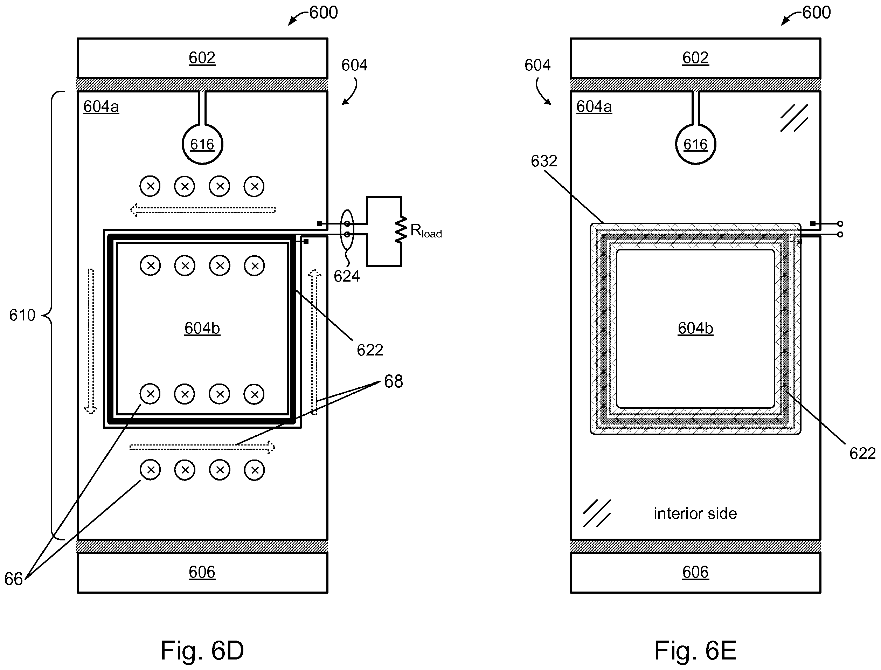

Fig. 6D illustrates the power receiving element 610 during wireless power transfer to provide power to a load R_{load}. In operation, since the conductive coil 622 is not covered by any of the conductive segments 604a, 604b, the externally generated magnetic field 66 can directly couple to the conductive coil 622. The direct coupling of the externally generated magnetic field 66 can induce a flow of current in the conductive coil 622, which in turn can be used to provide power to the load Rioad. In addition, a flow of eddy currents 68 in the conductive segment 604a may be produced and provided to the load Rioad. Depending on the direction of the externally generated magnetic field 66, the direction of the eddy currents 68 may be in a clockwise direction or in a counterclockwise direction, as depicted in Fig. 6D. Since the conductive segment 604a is connected in series fashion with the conductive coil 622, the eddy currents 68 induced in the conductive segment 604a can add to the current flow in the conductive coil 622, thus providing a combined current to the load Rioad.

Although not shown, a rectification circuit (and possibly other receive circuitry for filtering, conversion etc.) may be provided to convert the time-varying current flow into a direct current (DC) level in a suitable manner to be able to charge a battery or otherwise power other circuitry. In some embodiments, one or more tuning capacitors (not shown) or other suitable tuning network may be connected to the conductive coil 622 in order to define a resonant circuit having a resonant frequency that matches the frequency of the externally generated magnetic field.

Magnetic fields can arise in the power receiving element 610 during wireless power transfer, for example, due to the flow of eddy currents (e.g., 68, Fig. 6D) that can be induced in the conductive segment 604a. These magnetic fields may couple to electronic components (e.g., 42, Fig. 1) of an electronic device, which can interfere with proper operation of the electronic components. Accordingly as depicted in Fig. 6E, in some embodiments, magnetic shielding 632 may be provided to shield the electronic components from any magnetic fields that may arise during wireless power transfer. The magnetic shielding 632 may comprise a layer of ferrite; e.g., ferrite tape or other suitable ferrite material. The magnetic shielding 632 may be layered atop the conductive coil 622. In particular, the magnetic shielding 632 may be disposed on an interior side of the middle piece 604 of the back cover 600. The magnetic shielding 632 may be positioned between the conductive coil 622 and the electronic components (not shown), thus shielding the electronic components from magnetic fields that may arise in the vicinity of the conductive coil 622 during wireless power transfer. In another aspect, the magnetic shielding 632 provides a path for magnetic flux to travel in a way that may enhance coupling of the field with the conductive coil 622 and/or conductive segment 604a.

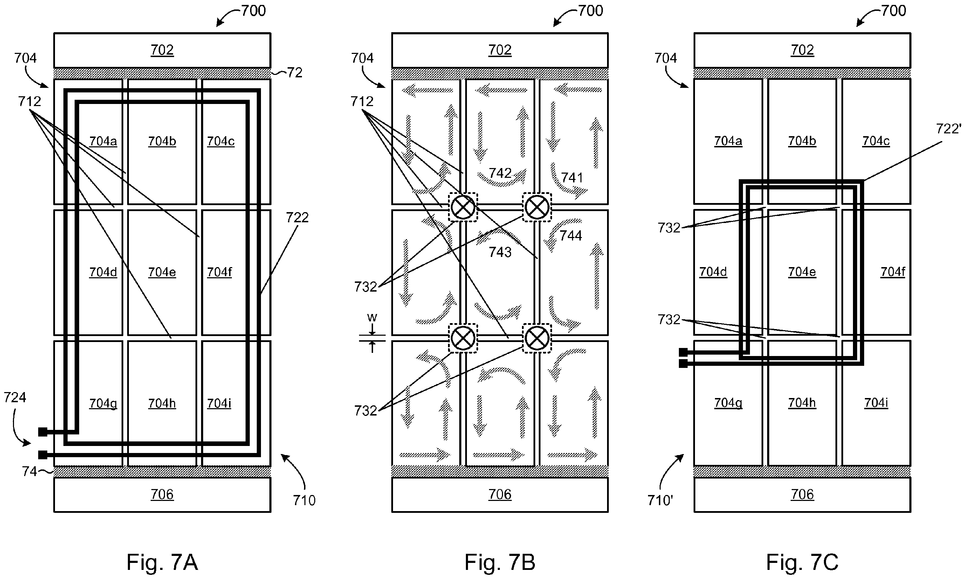

Fig. 7A shows a back cover 700 in accordance with some embodiments. The back cover 700 may comprise a top piece 702, a middle piece 704, and a bottom piece 706. The top piece 702 may be separated from the middle piece 704 by a suitable separator 72, such as described in Fig. 5A. Similarly, a separator 74 may separate the middle piece 704 from the bottom piece 706. The middle piece 704 may be electrically conductive and partitioned into conductive segments 704a - 704i. The conductive segments 704a - 704i may be separated from each other by slots 712.

A power receiving element 710 may comprise conductive segments 704a - 704i and a conductive coil 722 disposed across some of the conductive segments 704a - 704i. Fig. 7A, for example, shows the conductive coil 722 lies across conductive segments 704a - 704d and 704f - 704i. In some embodiments, the conductive coil 722 may cross the slots 712 instead lying along the slots 712, as depicted for example in Fig. 6B. The conductive coil 722 may lie beneath the middle piece 704, disposed in the interior of the electronic device (e.g., 40, Fig. 4A).

In some embodiments, the conductive coil 722 may be spaced apart from the surfaces of the conductive segments 704a - 704i by a distance of about 0.1 mm. In other embodiments, the spacing distance may be different. The spacing may be provided using a layer of electrically non-conductive material. In some embodiments, an insulative coating formed around the material used for the conductive coil 722 may serve to provide the spacing.

The conductive coil 722 may have two turns, as shown in Fig. 7A. In other embodiments, the conductive coil 722 may have a different number of turns. The conductive coil 722 may include output terminals 724. In some embodiments, the output terminals 724 may connect to a rectifier circuit (not shown) in order to provide a DC level to electronic components (e.g., 42, Fig. 4A) of an electronic device.

In operation, when the power receiving unit 710 is exposed to an externally generated magnetic field (not shown), eddy currents may be induced in the conductive segments 704a - 704i. Fig. 7B illustrates an example of eddy currents (represented by arrows) that may arise in the conductive segments 704a - 704i. The direction of flow of the eddy currents depend on the direction of the externally generated magnetic field. The slot widths w of slots 712 can be varied to control the formation of eddy currents in the conductive segments 704a - 704i. In the example illustrated in Fig. 7B, for example, the slot width w may be 0.5 mm or 1.0 mm, but can be different in other embodiments. In some embodiments, the slot width w may be the same for all the slots 712. In other embodiments, the slot width w may be different for different slots 712.

In response to the flow of eddy currents in the conductive segments 704a - 704i, magnetic fields may arise in the conductive segments 704a - 704i. These magnetic fields, in turn, may induce a flow of current in the conductive coil 722, which can be rectified and provided to a load (not shown) via output terminals 724. This may be referred to as "indirect" coupling of the conductive coil 722 to the externally generated magnetic field. In some embodiments, one or more tuning capacitors (not shown) or other suitable tuning network may be connected to the conductive coil 722 in order to define a resonant circuit having a resonant frequency that matches the frequency of the externally generated magnetic field.

The magnetic fields that arise from the conductive segments 704a - 704i due to the flow of eddy currents may couple with the externally generated magnetic field to increase mutual coupling between the power receiving element 710 and a source (not shown) of the externally generated magnetic field. Fig. 7B illustrates intersection regions 732 between the slots 712 where the dominant coupling can occur. This is because the magnetic field generated from the eddy currents (e.g., 741 - 744) around the intersection is constructively added up.

Fig. 7C shows a power receiving element 710' in accordance with some embodiments. In some embodiments, the conductive coil 722' may have a smaller perimeter. More particularly, the conductive coil 722' may be wound closer to the intersection regions 732 of the slots 712. The stronger magnetic fields at the intersection regions 732 can induce a greater flow of current in the conductive coil 722'. In one aspect, the stronger magnetic fields at the intersection regions 732 may occur as eddy currents in the conductive segments 704a - 704i may be more concentrated along the regions closer to the slots 712.

Although not depicted in Figs. 7A and 7C, a magnetic shield (e.g., 632, Fig. 6E) may be provided on an interior side of the back cover 700. More particularly, a magnetic shield may be disposed between the conductive coil 722 (Fig. 7A), 722' (Fig. 7C) and electronic components that may be exposed to magnetic fields which can arise during wireless power transfer. In some embodiments, the magnetic shield may cover the entire inside surface of the middle piece 704 of the back cover 700.

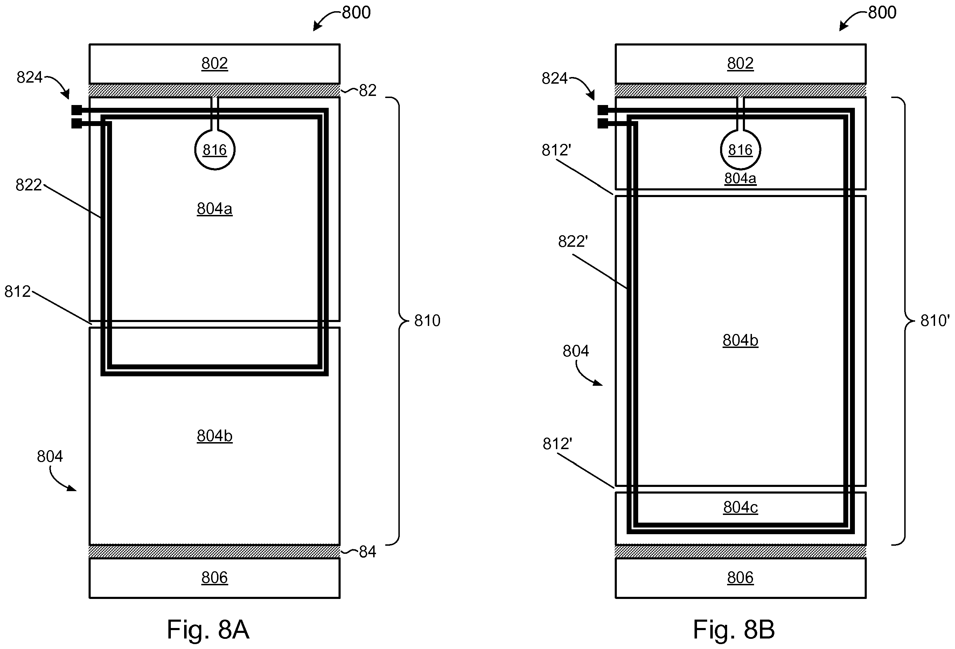

Fig. 8A shows a back cover 800 in accordance with some embodiments. The back cover 800 may comprise a top piece 802, a middle piece 804, and a bottom piece 806. The top piece 802 may be separated from the middle piece 804 by a suitable separator 82, such as described in Fig. 5A. Similarly, a separator 84 may separate the middle piece 804 from the bottom piece 806. The middle piece 804 may be electrically conductive and partitioned into conductive segments 804a, 804b. The conductive segments 804a, 804b may be separated by a slot 812. An opening 816 may be provided in conductive segment 804a, for example, to accommodate a camera lens.

A power receiving element 810 may comprise conductive segments 804a, 804b and a conductive coil 822 disposed across the conductive segments 804a, 804b. The power receiving element 810 represents an example of a vertically stacked configuration. Fig. 8A, for example, shows a two-element vertically stacked configuration.

The conductive coil 822 may have two turns, as shown in Fig. 8A. In other embodiments, the conductive coil 822 may have a different number of turns. In some embodiments, the conductive coil 822 may be spaced apart from the surfaces of the conductive segments 804a, 804b by a distance of about 0.1 mm. In other embodiments, the spacing distance may be different.

The conductive coil 822 may include output terminals 824. In some embodiments, the output terminals 824 may connect to a rectifier circuit (not shown) in order to provide a DC level to electronic components (e.g., 42, Fig. 4A) of an electronic device.

In operation, when the power receiving unit 810 is exposed to an externally generated magnetic field (not shown), eddy currents may be induced in the conductive segments 804a, 804b. The width of slot 812 can be increased or decreased to control the formation of eddy currents in the conductive segments 804a, 804b.

In response to the flow of eddy currents, magnetic fields may arise in the conductive segments 804a, 804b. These magnetic fields, in turn, may induce a flow of current in the conductive coil 822 (indirect coupling to the externally generated magnetic field), which can be rectified and provided to a load (not shown) via output terminals 824. In some embodiments, one or more tuning capacitors (not shown) or other suitable tuning network may be connected to the conductive coil 822 in order to define a resonant circuit having a resonant frequency that matches the frequency of the externally generated magnetic field.

Although not depicted in Fig. 8A, a magnetic shield (e.g., 632, Fig. 6E) may be provided on an interior side of the back cover 800. More particularly, a magnetic shield may be disposed between the conductive coil 822 and electronic components that may be exposed to magnetic fields which can arise during wireless power transfer.

Fig. 8B shows a power receiving element 810' having a three-element vertically stacked configuration, instead of the two-element vertically stacked configuration of Fig. 8A. The middle piece 804 of the back cover 800 may comprise three vertically arranged conductive segments 804a, 804b, 804c, separated by slots 812'. The power receiving element 810' may comprise the conductive segments 804a - 804c and a conductive coil 822' that winds across the three vertically arranged conductive segments 804a, 804b, 804c. Operation of this embodiment is similar to the operation described in Fig. 8A.

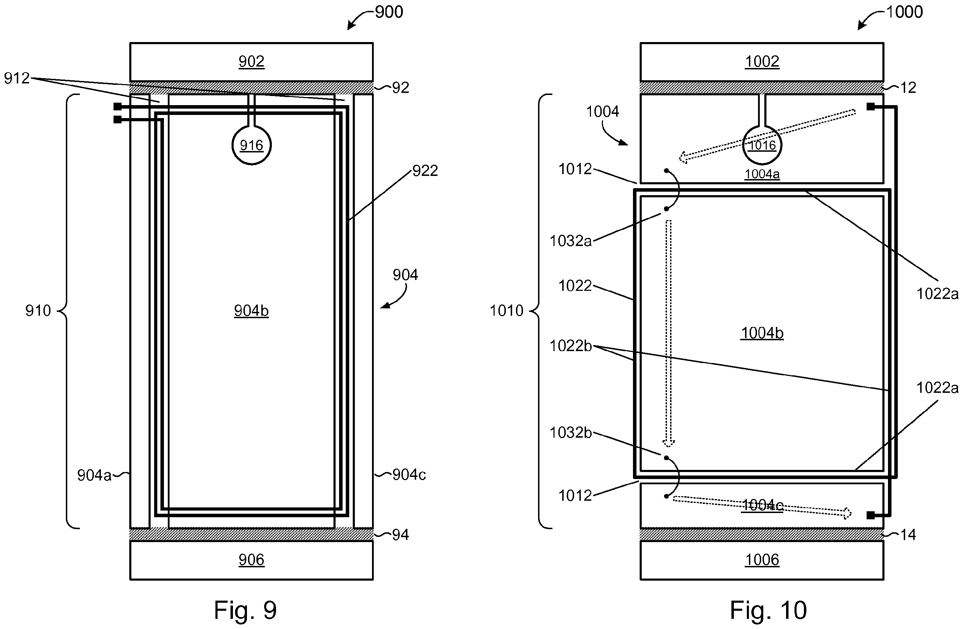

Fig. 9 shows a back cover 900 in accordance with some embodiments. The back cover 900 may comprise a top piece 902, a middle piece 904, and a bottom piece 906. The top piece 902 may be separated from the middle piece 904 by a suitable separator 92, such as described in Fig. 5A. Similarly, a separator 94 may separate the middle piece 904 from the bottom piece 906. The middle piece 904 may be electrically conductive and partitioned into conductive segments 904a, 904b, 904c. The conductive segments 904a - 904c may be separated by slots 912. An opening 916 may be provided in conductive segment 904b, for example, to accommodate a camera lens.

Instead of the vertically stacked arrangement shown in Figs. 8A and 8B, Fig. 9 shows a power receiving element 910 having a horizontal configuration of conductive segments 904a - 904c and a conductive coil 922 arranged horizontally. The conductive coil 922 may have portions that lie across the conductive segment 904b, and portions that lie along the slots 912. In some embodiments, one or more tuning capacitors (not shown) or other suitable tuning network may be connected to the conductive coil 922 in order to define a resonant circuit having a resonant frequency that matches the frequency of an externally generated magnetic field for wireless power transfer.

The vertical portions of conductive coil 922 that run along slots 912 are not covered by any of the conductive segments 904a - 904c. Accordingly, in the presence of an externally generated magnetic field (not shown), the externally generated magnetic field can directly couple with these vertical portions of the conductive coil 922 to induce a flow of current in the conductive coil 922.

Although not depicted in Fig. 9, a magnetic shield (e.g., 632, Fig. 6E) may be provided on an interior side of the back cover 900. More particularly, a magnetic shield may be disposed between the conductive coil 922 and electronic components that may be exposed to magnetic fields which can arise during wireless power transfer.

Fig. 10 shows a back cover 1000 in accordance with some embodiments. The back cover 1000 may comprise a top piece 1002, a middle piece 1004, and a bottom piece 1006. The top piece 1002 may be separated from the middle piece 1004 by a suitable separator 12, such as described in Fig. 5A. Similarly, a separator 14 may separate the middle piece 1004 from the bottom piece 1006. The middle piece 1004 may be electrically conductive and partitioned into conductive segments 1004a, 1004b, 1004c. The conductive segments 1004a - 1004c may be separated by slots 1012. An opening 1016 may be provided in conductive segment 1004b, for example, to accommodate a camera lens.

The power receiving element 1010 shown in Fig. 10 is another example of a vertically stacked configuration, such as depicted in Figs. 8A and 8B. The power receiving element 1010 in Fig. 10 may comprise the vertically stacked conductive segments 1004a - 1004c and a conductive coil 1022. The conductive coil 1022 may have portions 1022a that lie along the slots 1012, and portions 1022b that run along the outer peripheries of the conductive segments 1004a - 1004c.

The power receiving element 1010 may further comprise connectors 1032a, 1032b that connect together the conductive segments 1004a - 1004c in series fashion. For example connector 1032a may connect together conductive segments 1004a and 1004b, and connector 1032b may connect together conductive segments 1004b and 1004c. The series connected segments 1004a - 1004c may be viewed as defining one half of a turn in the power receiving element 1010. In the embodiment depicted in Fig. 10, the conductive coil 1022 defines two turns in the power receiving element 1010, for a total of 2.5 turns in the power receiving element 1010. In some embodiments, one or more tuning capacitors (not shown) or other suitable tuning network may be connected to the conductive coil 1022 in order to define a resonant circuit having a resonant frequency that matches the frequency of an externally generated magnetic field for wireless power transfer.

The conductive coil 1022 is not covered by any of the conductive segments 1004a - 1004c. Accordingly, in the presence of an externally generated magnetic field (not shown), the externally generated magnetic field can directly couple with the conductive coil 1022 to induce a flow of current in the conductive coil 1022. The path of the induced current in the power receiving element 1010 includes the conductive coil 1022 and the conductive segments 1004a, 1004b, and 1004c. Power can be tapped anywhere in the power receiving element 1010 that is convenient.

Although not shown in Fig. 10, a magnetic shield (e.g., 632, Fig. 6E) may be provided on an interior side of the back cover 1000. A magnetic shield may be disposed between the conductive coil 1022 and electronic components that may be exposed to magnetic fields which can arise during wireless power transfer. More particularly, a magnetic shield may be provided on portions 1022a of the conductive coil 1022 that lie along the slots 1012.

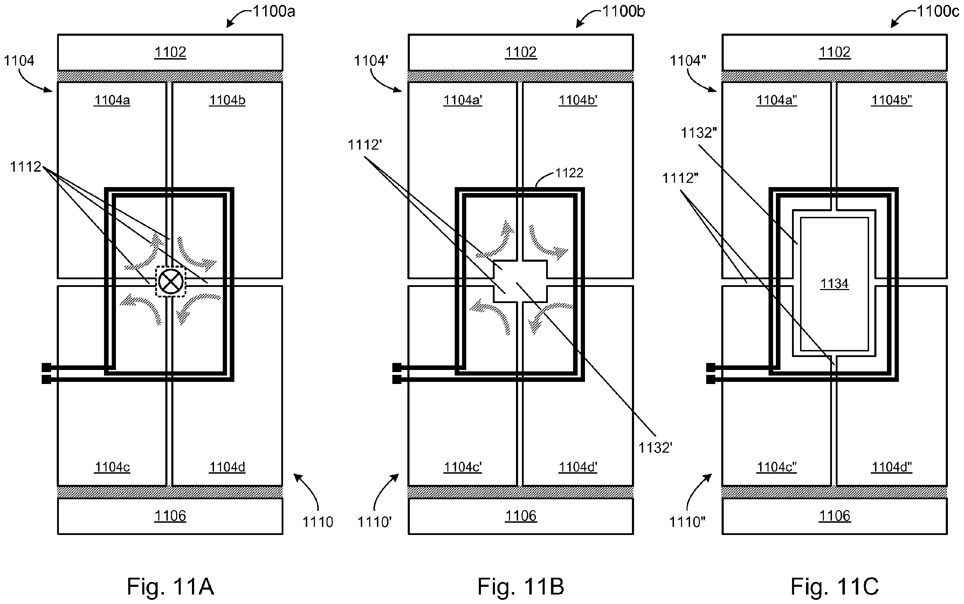

Fig. 11A shows a back cover 1100a in accordance with some embodiments. The back cover 1100a may comprise a top piece 1102, a middle piece 1104, and a bottom piece 1106. The middle piece 1104 may be electrically conductive, and Fig. 11A shows that the middle piece 1104 may be partitioned into four conductive segments 1104a, 1104b, 1104c, 1104d, similar to the embodiment shown in Fig. 7A. The conductive segments 1104a - 1104d may be separated by slots 1112.

A power receiving element 1110 may comprise conductive segments 1104a - 1104d and a conductive coil 1122 disposed across the conductive segments 1104a - 1104d. The conductive coil 1122 may lie beneath the middle piece 1104, disposed in the interior of the electronic device (e.g., 40, Fig. 4A).

In operation, when the power receiving unit 1110 is exposed to an externally generated magnetic field (not shown), eddy currents may be induced in the conductive segments 1104a - 1104d. In response to the flow of the eddy currents, magnetic fields may arise from the conductive segments 1104a - 1104d. These magnetic fields, in turn, may induce a flow of current in the conductive coil 1122, similar to Fig. 7B (indirect coupling to the externally generated magnetic field), which can be rectified and provided to a load (not shown). In some embodiments, one or more tuning capacitors (not shown) or other suitable tuning network may be connected to the conductive coil 1122 in order to define a resonant circuit having a resonant frequency that matches the frequency of the externally generated magnetic field.

Fig. 11B depicts a variation of the embodiment shown in Fig. 11A. Fig. 11B shows a back cover 1100b in accordance with some embodiments. The back cover 1100b may comprise a top piece 1102, a middle piece 1104', and a bottom piece 1106. The middle piece 1104' may be electrically conductive, and Fig. 11B shows that the middle piece 1104' may be partitioned into four conductive segments 1104a', 1104b', 1104c', 1104d'. A power receiving element 1110' may comprise conductive segments 1104a' - 1104d' and a conductive coil 1122 disposed across the conductive segments 1104a' - 1104d'. The conductive coil 1122 may lie beneath the middle piece 1104, disposed in the interior of the electronic device (e.g., 40, Fig. 4A).

The conductive segments 1104a' - 1104d' may be shaped so that the slots 1112' can vary in shape. Fig. 11B, for example, shows an embodiment in which an open region 1132' may be defined in the center portion of the middle piece 1104'. The open region 1132' can increase mutual inductance by increasing the magnitude and bigger current path of the four eddy current around the intersection in each conductive segments 1104a'-1104d'. In another embodiment where coil is inside the open region 1132', the open region 1132' may allow for an externally generated magnetic field (not shown) to directly couple with the conductive coil 1122, in addition to the indirect coupling explained above for Fig. 11A. The open region 1132' may be covered with a non-conductive material (not shown), for example, to protect the underlying components from the environment.

Fig. 11C depicts yet another variation of the embodiment shown in Fig. 11A. Fig. 11C shows a back cover 1100c in accordance with some embodiments. The back cover 1100c may comprise a top piece 1102, a middle piece 1104", and a bottom piece 1106. The middle piece 1104" may be electrically conductive, and Fig. 11C shows that the middle piece 1104" may be partitioned into four conductive segments 1104a", 1104b", 1104c", 1104d". A power receiving element 1110" may comprise conductive segments 1104a" - 1104d" and a conductive coil 1122 disposed across the conductive segments 1104a" - 1104d". The conductive coil 1122 may lie beneath the middle piece 1104, disposed in the interior of the electronic device (e.g., 40, Fig. 4A).

The conductive segments 1104a" - 1104d" may be shaped so that the slots 1112" can vary in shape. Fig. 11C, for example, shows an embodiment in which an open region 1132" may be defined in the center portion of the middle piece 1104". A segment 1134 may be provided in the open region 1132". In some embodiments, the segment 1134 may be the same conductive material as conductive segments 1104a" - 1104d". Although the segment 1134 may prevent the direct coupling of an externally generated magnetic field (not show) to the conductive coil 1122, the segment 1134, being the same material as conductive segments 1104a" - 1104d" may provide an aesthetic look to the design of the back cover 1100c.

In accordance with the present disclosure, the foregoing embodiments provide a method for wireless power transfer in an electronic device. Referring, for example, to Fig. 7A, the method may include magnetically inducing flows of eddy currents in a plurality of conductive segments 704a - 704i that comprise a portion 700 of a housing (e.g., 400, Fig. 4A). of an electronic device, magnetically inducing a flow of current in an electrically conductive coil 722 arranged relative to the plurality of conductive segments704a - 704i, and providing via output 724 either or both the eddy currents in the at least one of the plurality of conductive segments or the current in the electrically conductive coil to electronic circuits in the electronic device.

In accordance with the present disclosure, the foregoing embodiments provide a method for an apparatus to provide wireless power transfer in an electronic device. Referring, for example, to Fig. 7A, the method may include providing a plurality of electrically conductive segments 704a - 704i that constitute a portion 700 of a housing (e.g., 400, Fig. 4A) configured to enclose electronic components of the electronic device, the plurality electrically conductive segments separated from each other by a plurality of slots 712, providing an electrically conductive coil 722 arranged relative to the plurality of electrically conductive segments704a - 704i, and providing a power receiving element 710 comprising the electrically conductive coil 722 and the plurality of electrically conductive segments 704a - 704i, and configured to couple to an externally generated magnetic field to wirelessly receive power.

The formation of eddy currents in the conductive segments (e.g., 704a - 704i, Fig. 7A) are generally considered non-productive. However, in accordance with the present disclosure, the eddy currents may be used in a constructive manner, namely to generate magnetic fields (e.g., at the slots 712, Fig. 7A), which can then induce a flow of current in the conductive coil 722 (referred to above as indirect coupling).

The various operations of methods described above may be performed by any suitable means capable of performing the operations, such as various hardware and/or software component(s), circuits, and/or module(s). Generally, any operations illustrated in the figures may be performed by corresponding functional means capable of performing the operations.

The above description illustrates various embodiments of the present disclosure along with examples of how aspects of the particular embodiments may be implemented. The above examples should not be deemed to be the only embodiments, and are presented to illustrate the flexibility and advantages of the particular embodiments as defined by the following claims. Based on the above disclosure and the following claims, other arrangements, embodiments, implementations and equivalents may be employed without departing from the scope of the present disclosure as defined by the claims.

## Claims

1. An apparatus for wireless power transfer in an electronic device comprising:
a plurality of electrically conductive segments (604, 704, 804, 904, 1004, 1104) that constitute a portion of a housing (600, 700, 800, 900, 1000, 1100) configured to enclose electronic components of the electronic device, the plurality of electrically conductive segments separated from each other by a plurality of slots (612, 712, 812, 912, 1012, 1112) providing physical separation between the plurality of electrically conductive segments;
an electrically conductive coil (622, 722, 822, 922, 1022, 1122) arranged relative to the plurality of electrically conductive segments; and
a power receiving element comprising the electrically conductive coil and the plurality of electrically conductive segments, and configured to couple to an externally generated magnetic field to wirelessly receive power.

2. The apparatus of claim 1, wherein eddy currents form in at least some of the plurality of electrically conductive segments in response to the externally generated magnetic field, wherein the electrically conductive coil is configured to generate electrical current in response to a first magnetic field generated by the eddy currents.

3. The apparatus of claim 1, wherein an arrangement of the electrically conductive coil relative to the plurality of slots is such that the electrically conductive coil substantially only crosses the plurality of slots.

4. The apparatus of claim 1, wherein the portion of the housing comprises a top piece, a middle piece, and a bottom piece, wherein the middle piece comprises the plurality of electrically conductive segments and the plurality of slots.

5. The apparatus of claim 1, wherein the power receiving element further comprises a first electrically conductive segment of the plurality of electrically conductive segments electrically connected in series with the electrically conductive coil, wherein the first electrically conductive segment defines at least one turn of the power receiving element and the electrically conductive coil defines additional turns of the power receiving element.

6. The apparatus of claim 5, further comprising a second electrically conductive segment of the plurality of electrically conductive segments that is electrically separate from and surrounded by the first electrically conductive segment.

7. The apparatus of claim 1, wherein two or more of the plurality of electrically conductive segments are electrically connected in series and comprise at least a portion of a turn of the power receiving element.

8. The apparatus of claim 1, wherein the electrically conductive coil lies across some of the plurality of electrically conductive segments.

9. The apparatus of claim 1, wherein the electrically conductive coil is disposed across some of the plurality of slots.

10. The apparatus of claim 1, wherein a separation distance between some of the plurality of electrically conductive segments varies.

11. A method for wireless power transfer in an electronic device comprising:
magnetically inducing flows of eddy currents in a plurality of conductive segments that comprise a portion of a housing of an electronic device, the housing configured to enclose electronic components of the electronic device, the plurality of electrically conductive segments separated from each other by a plurality of slots providing physical separation between the plurality of electrically conductive segments;
magnetically inducing a flow of current in an electrically conductive coil arranged relative to the plurality of conductive segments; and
providing either or both the eddy currents in at least one of the plurality of conductive segments or the current in the electrically conductive coil to electronic circuits in the electronic device.

12. The method of claim 11, further comprising adding the eddy currents in the plurality of conductive segments and the current in the electrically conductive coil to produce a combined current that is provided to the electronic circuits.

13. The method of claim 11, wherein magnetically inducing a flow of current in the electrically conductive coil includes coupling to magnetic fields that arise due to the flow of eddy currents in the plurality of conductive segments.

14. The method of claim 11, further comprising coupling to an externally generated magnetic field to induce the flows of eddy currents in the plurality of conductive segments.

15. The method of claim 11, further comprising coupling to an externally generated magnetic field to induce the flow of current in the electrically conductive coil.

## Patentansprüche

1. Eine Vorrichtung für Drahtlosleistungsübertragung in einer Elektronikeinrichtung, die Folgendes aufweist:
eine Vielzahl von elektrisch leitenden Segmenten (604, 704, 804, 904, 1004, 1104), die einen Teil eines Gehäuses (600, 700, 800, 900, 1000, 1100) ausmachen, das konfiguriert ist elektronische Komponenten der Elektronikeinrichtung zu umschließen, wobei die Vielzahl von elektrisch leitenden Segmenten voneinander durch eine Vielzahl von Schlitzen (612, 712, 812, 912, 1012, 1112) getrennt sind, die eine physische Trennung zwischen der Vielzahl von elektrisch leitenden Segmenten vorsehen;
eine elektrisch leitende Spule (622, 722, 822, 922, 1022, 1122), die angeordnet ist relativ zu der Vielzahl von elektrisch leitenden Segmenten; und
ein Leistung empfangendes Element, das die elektrisch leitende Spule und die Vielzahl von elektrisch leitenden Segmenten aufweist, und konfiguriert ist zum Koppeln an einen extern generiertes Magnetfeld zum drahtlosen Empfangen von Leistung.

2. Vorrichtung nach Anspruch 1, wobei sich Wirbelströme in wenigstens einigen der Vielzahl von elektrisch leitenden Segmenten ansprechend auf das extern generierte Magnetfeld bilden, wobei die elektrisch leitende Spule konfiguriert ist zum Generieren von elektrischem Strom ansprechend auf ein erstes Magnetfeld, das durch die Wirbelströme generiert wird.

3. Vorrichtung nach Anspruch 1, wobei eine Anordnung der elektrisch leitenden Spule relativ zu der Vielzahl von Schlitzen so ist, dass die elektrisch leitende Spule im Wesentlichen die Vielzahl von Schlitzen nur kreuzt.

4. Vorrichtung nach Anspruch 1, wobei der Teil des Gehäuses ein oberes Stück, ein mittleres Stück und unteres Stück aufweist, wobei das mittlere Stück die Vielzahl von elektrisch leitenden Segmenten und die Vielzahl von Schlitzen aufweist.

5. Vorrichtung nach Anspruch 1, wobei das Leistung empfangende Element weiter ein erstes elektrisch leitendes Segment der Vielzahl von elektrisch leitenden Segmenten aufweist, die elektrisch in Reihe mit der elektrisch leitenden Spule verbunden sind, wobei das erste elektrisch leitende Segment wenigstens eine Windung des Leistung empfangenen Elementes definiert und die elektrisch leitende Spule zusätzliche Windungen des Leistung empfangenen Elementes definiert.

6. Vorrichtung nach Anspruch 5, die weiter ein zweites elektrisch leitendes Segment der Vielzahl von elektrisch leitenden Segmenten aufweist, das elektrisch von dem ersten elektrisch leitenden Segment getrennt ist und von diesem umgeben wird.

7. Vorrichtung nach Anspruch 1, wobei zwei oder mehr der Vielzahl von elektrisch leitenden Segmenten elektrisch in Reihe verbunden sind und wenigstens einen Teil einer Windung des Leistung empfangenden Elementes aufweisen.

8. Vorrichtung nach Anspruch 1, wobei die elektrisch leitende Spule über einige der Vielzahl von elektrisch leitenden Segmenten hinweg verläuft.

9. Vorrichtung nach Anspruch 1, wobei die elektrisch leitende Spule über einige der Vielzahl von Schlitzen hinweg angeordnet ist.

10. Vorrichtung nach Anspruch 1, wobei eine Trennungsdistanz zwischen einigen der Vielzahl von elektrisch leitenden Elementen variiert.

11. Ein Verfahren für Drahtlosleistungsübertragung in einer elektronischen Einrichtung, das Folgendes aufweist:
magnetisches Induzieren von Flüssen von Wirbelströmen in einer Vielzahl von leitenden Segmenten, die einen Teil eines Gehäuses einer Elektronikeinrichtung aufweisen, wobei das Gehäuse konfiguriert ist zum Umschließen elektronischer Komponenten der Elektronikeinrichtung, wobei die Vielzahl von elektrisch leitenden Elementen voneinander durch eine Vielzahl von Schlitzen beabstandet bzw. getrennt ist, die eine physische Trennung zwischen der Vielzahl von elektrisch leitenden Segmenten vorsehen;
magnetisches Induzieren eines Flusses von Strom in einer elektrisch leitenden Spule, die relativ zu der Vielzahl von leitenden Segmenten angeordnet ist; und
Liefern von entweder den Wirbelströmen in wenigstens einem der Vielzahl von leitenden Segmenten oder des Stroms in der elektrisch leitenden Spule oder von beidem an Elektronikschaltungen in der Elektronikeinrichtung.

12. Verfahren nach Anspruch 11, das weiter Addieren der Wirbelströme in der Vielzahl von leitenden Segmenten und des Stroms in der elektrisch leitenden Spule zum Erzeugen eines kombinierten Stroms, der an die Elektronikschaltungen geliefert wird, aufweist.

13. Verfahren nach Anspruch 11, wobei das magnetische Induzieren eines Flusses von Strom in der elektrisch leitenden Spule Koppeln an Magnetfelder aufweist, die aufgrund des Flusses von Wirbelströmen in der Vielzahl von leitenden Segmenten auftreten.

14. Verfahren nach Anspruch 11, das weiter Koppeln an ein extern generiertes Magnetfeld zum Induzieren der Flüsse von Wirbelströmen in der Vielzahl von leitenden Segmenten aufweist.

15. Verfahren nach Anspruch 11, das weiter Koppeln an ein extern generiertes Magnetfeld zum Induzieren des Flusses von Strom in der elektrisch leitenden Spule aufweist.

## Revendications

1. Dispositif pour le transfert d'énergie sans fil dans un appareil électronique, comprenant :
une pluralité de segments conducteurs de l'électricité (604, 704, 804, 904, 1004, 1104) qui constituent une partie d'un boîtier (600, 700, 800, 900, 1000, 1100) configuré pour enfermer des composants électroniques de l'appareil électronique, la pluralité de segments conducteurs de l'électricité étant séparés l'un de l'autre par une pluralité de fentes (612, 712, 812, 912, 1012, 1112) assurant une séparation physique entre la pluralité de segments conducteurs de l'électricité ;
une bobine de matériau conducteur de l'électricité (622, 722, 822, 922, 1022, 1122) disposée par rapport aux premier et deuxième segments conducteurs de l'électricité ; et
un élément de réception de l'énergie comprenant la bobine de matériau conducteur de l'électricité et la pluralité de segments conducteurs de l'électricité, et configuré pour se coupler à un champ magnétique généré en externe pour recevoir de l'énergie par voie hertzienne.

2. Dispositif selon la revendication 1, dans lequel des courants de Foucault se forment dans au moins certains de la pluralité de segments conducteurs de l'électricité en réponse au champ magnétique généré en externe, dans lequel la bobine conductrice de l'électricité est configurée pour générer un courant électrique en réponse à un premier champ magnétique produit par les courants de Foucault.

3. Dispositif selon la revendication 1, dans lequel un agencement de la bobine conductrice de l'électricité par rapport à la pluralité de fentes est tel que la bobine conductrice de l'électricité ne traverse sensiblement que la pluralité de fentes.

4. Dispositif selon la revendication 1, dans lequel la partie du boîtier comprend une pièce supérieure, une pièce centrale, et une pièce de fond, dans lequel la pièce centrale comprend la pluralité de segments conducteurs de l'électricité et la pluralité de fentes.

5. Dispositif selon la revendication 1, dans lequel l'élément de réception de l'énergie comprend en outre un premier segment conducteur de l'électricité parmi la pluralité de segments conducteurs de l'électricité connectés électriquement en série avec la bobine conductrice de l'électricité, dans lequel le premier segment conducteur de l'électricité définit au moins une spire de l'élément de réception de l'énergie et la bobine conductrice de l'électricité définit des spires supplémentaires de l'élément de réception de l'énergie.

6. Dispositif selon la revendication 5, comprenant en outre un deuxième segment conducteur de l'électricité de la pluralité de segments conducteurs de l'électricité qui est électriquement séparé du premier segment conducteur de l'électricité et entouré par celui-ci.

7. Dispositif selon la revendication 1, dans lequel deux ou plusieurs de la pluralité de segments conducteurs de l'électricité sont connectés électriquement en série et comprennent au moins une partie d'une spire de l'élément de réception de l'énergie.

8. Dispositif selon la revendication 1, dans lequel la bobine conductrice de l'électricité est située à travers certains parmi la pluralité de segments conducteurs de l'électricité.

9. Dispositif selon la revendication 1, dans lequel la bobine électriquement conductrice est située à travers certaines parmi la pluralité de fentes.

10. Dispositif selon la revendication 1, dans lequel une distance de séparation entre certains parmi la pluralité de segments conducteurs de l'électricité varie.

11. Procédé de transfert d'énergie sans fil dans un appareil électronique comprenant les étapes consistant à :
induire des flux magnétiquement induits de courants de Foucault dans une pluralité de segments conducteurs qui constituent une partie d'un boîtier d'un appareil électronique, le boîtier étant configuré pour enfermer des composants électroniques de l'appareil électronique, la pluralité de segments conducteurs de l'électricité étant séparés l'un de l'autre par une pluralité de fentes assurant une séparation physique entre la pluralité de segments conducteurs de l'électricité ;
induire, magnétiquement, un flux de courant dans une bobine électriquement conductrice agencée par rapport à la pluralité de segments conducteurs ; et
fournir soit les courants de Foucault dans au moins une de la pluralité de segments conducteurs, soit le courant dans la bobine conductrice de l'électricité, soit les deux, à des circuits électroniques dans l'appareil électronique.

12. Procédé selon la revendication 11, comprenant en outre l'addition des courants de Foucault dans la pluralité de segments conducteurs et le courant dans la bobine conductrice de l'électricité pour produire un courant combiné qui est fourni aux circuits électroniques.

13. Procédé selon la revendication 11, dans lequel l'induction magnétique d'un flux de courant dans la bobine conductrice de l'électricité comprend un couplage à des champs magnétiques qui sont créés en raison de la circulation de courants de Foucault dans la pluralité de segments conducteurs.

14. Procédé selon la revendication 11, comprenant en outre le couplage à un champ magnétique généré en externe pour induire le flux des courants de Foucault dans la pluralité de segments conducteurs.

15. Procédé selon la revendication 11, comprenant en outre le couplage à un champ magnétique généré en externe pour induire le passage du courant dans la bobine conductrice de l'électricité.
